# EUROPEAN PATENT SPECIFICATION

(11) **EP 1 567 021 B1**
(45) Date of publication and mention of the grant of the patent: **13.01.2010**
(21) Application number: 03812343.6
(22) Date of filing: 28.11.2003
(51) Int. Cl.: A23L 1/221, A23C 9/16, A23F 5/46, A23L 1/22

(54) **GRANULATED FLAVOR AND METHOD FOR PRODUCING THE SAME**
GESCHMACKSGRANULAT UND VERFAHREN ZUR HERSTELLUNG DESSELBEN
AROME EN GRANULES ET PROCEDE DE FABRICATION

(30) Priority: 02.12.2002 JP 2002349776
(43) Date of publication of application: 31.08.2005
(73) Proprietor: Takasago International Corporation, Tokyo-to 144-8721 (JP)
(72) Inventor: NAGAO, Masaharu, Hiratsuka-shi, Kangawa 254 (JP); NAKAMURA, Takeshi, Hiratsuka-shi, Kangawa 254 (JP)
(74) Representative: HOFFMANN EITLE
(86) International application number: PCT/JP2003/015239
(87) International publication number: WO 2004/049827

(56) References cited:
- WO-A-00/25606
- WO-A-85/03414
- WO-A-99/32092
- GB-A- 359 458
- GB-A- 655 592
- US-A- 5 922 385
- US-A1- 2001 036 503
- US-B1- 6 318 650

## Description

### Technical Field

The present invention relates to a method for producing a granulated flavor and a granulated flavor for use in foods and beverages with specific moisture content and hardness. More particularly, the present invention relates to a granulated flavor for use in foods and beverages (hereinafter, sometimes referred to as a "granulated flavor") with outstanding storage stability whose form is less likely to crumble and which releases flavor immediately when needed.

### Background Art

Examples of conventionally known methods for powdering flavors include spray drying, freeze drying and absorption process. When a powdered flavor is produced by spray drying, the resulting powder has a relatively small size of 50 to 200 µm, which not only has a poor flow property but also has a disadvantage of a poor solubility in cold water and the like. In this respect, freeze drying in which raw materials are frozen and dried resolves the above-described disadvantages of spray drying. However, since freeze drying requires longer time in drying, it is less efficient. Absorption process requires shorter processing time since powdered flavor can be obtained through a simple manipulation of mixing liquid and powder, and thus seems a rational process. However, the resulting powder has problems of being susceptible to flavor deterioration upon storage and of being highly hygroscopic.

On the other hand, since a conventional granulation process is known to result in flavor deterioration due to the heating process for evaporating water, a technique in which fatty oil and powdered food are mixed together and then the mixture is subjected to dry compaction granulation is reported (e.g., see Patent document 1: Japanese Patent Laid-Open Application No. 11-276144 (especially, 2nd col., lines 8-11)).

Furthermore, since a conventional granulation process is known to lose aroma during the heating step and thus results in flavor deterioration, a method of compaction granulation without adding water, in which powder ingredient with 10% or greater extracted powdered flavor component is used while the moisture content in the powder ingredient is 1-5% is reported (e.g., see Patent document 2: Japanese Patent Laid-Open Application No. 11-239961 (especially, 3rd col., lines 16-18)).

During having studied a powdered flavor obtained through the above-described dry compaction granulation, the present inventors blended the powdered flavor in a chewing-gum base to obtain a stick gum and they found that when chewing this stick gum the release of the flavor tends to be late and that the aroma is weakened. Through diverse studies, the present inventors assumed that this phenomenon is due to the breakdown of the powdered flavors by which the flavor inside the powder is released and dissolved in the chewing-gum base. Thus, the objectives of the present invention is to provide a granulated flavor which is less likely to crumble, and to provide a granulated flavor having the above-described property as well as a good aroma storage stability and immediate release of flavor when needed.

US 6,318,650 relates to a process for the continuous production of solid, particulate preparations of bioactive substances, in which the bioactive substances are homogenously dispersed in a matrix of thermoplastic auxiliaries, in a screw extruder having an extruder jacket, which extruder is divided into a plurality of zones, said process comprising the steps of
i) firstly melting the matrix auxiliaries and mixing the bioactive components with the matrix auxiliary in a heatable zone of the extruder to form a mixture, and
ii) subsequently cooling, precomminuting and finely grinding the mixture in a cooling zone of the extruder to form a powder.

US 5,922,385 relates to a process for preparing soluble coffee particles, which comprises the step of forming a thermoplastic melt from a mixture comprising soluble coffee solids, water, coffee aroma and flavor volatiles, forming this melt into a solidified elongate coffee structure, expanding the same in a controlled manner, drying the resulting porous coffee matrix and granulating the dried matrix. One key aspect of this process is to heat the mixture above the glass transition temperature of the coffee solids. Further, it is described that the head temperature of the extruder is high enough such that a thermoplastic coffee melt is formed within the extruder barrel.

US 2001/0036503 A1 discloses a process for shaping into a granular form a delivery system for the controlled release of flavor or fragrance compounds. This process includes the steps of preparing a mixture of a continuous phase carrier containing a volatile flavor or fragrance compound or compositions finely divided therein and having a low water content. The mixture is then heated within a screw extruder to a temperature of between 90 and 130°C to form a molten mass, the molten mass is extruded through a die and then chopped as it exits the die. The latter step is performer at a temperature above the glass transition temperature of the carrier.

### Disclosure of Invention

The present inventors have devoted themselves to studies to find out solution to the above-described objectives. As a result, they found that when a partially-melted plate-like matter obtained by firmly compacting a conventional powdered flavor with rollers is cooled down and then subjected to grinding and granulation, a granulated flavor which is less likely to breakdown and which has a good aroma storage stability and immediate release of flavor when needed. The present inventors continued further studies and found that by forcing a powdered flavor prepared from raw materials containing a flavor and a carrier to free-fall into the feed hopper, conveying it with a horizontal screw to obtain a pressed powdered flavor, compacting the pressed powdered flavor with rollers to obtain a plate-like matter, cooling down the partially-melted plate-like matter and subjecting the cooled plate-like matter to grinding and granulation, the resulting granulated flavor is difficult to crumble, has a good aroma storage stability and immediately releases flavor when needed, thereby achieving the present invention.

Thus, the present invention provides the followings.

- A method for producing a granulated flavor, comprising: compacting a powdered flavor prepared from raw materials containing a flavor and a carrier with rollers to obtain a partially melted plate-like matter; cooling the plate-like matter; and grinding and granulating the cooled plate-like matter.
- A method for producing a granulated flavor, comprising:
   forcing a powdered flavor prepared from raw materials containing a flavor and a carrier to free-fall into the feed hopper; conveying the powdered flavor with a horizontal screw to obtain a pressed powdered flavor; compacting the pressed powdered flavor with rollers to obtain a partially melted plate-like matter; cooling the plate-like matter; and grinding and granulating the cooled plate-like matter.
- A granulated flavor as defined in the claims having a moisture content of 10% or less by weight and a hardness of 1 N/mrn²-50 N/mm².
- The above-described granulated flavor containing particles having a particle size of 105 µm-2 mm, wherein the proportion of the particles having that particle size is 85% or more by weight.
- A food or beverage comprising the above-described granulated flavor.

### Best Modes for Carrying Out the Invention

Hereinafter, the present invention will be described in more detail.

First, flavor as one of the raw materials for composing a granulated flavor will be described. The flavor used in the present invention is not particularly limited as long as it is capable of achieving the above-described objectives. Examples of flavors from natural sources include: an essential oil obtained through squeezing or steam distillation of plant materials; oleoresin obtained by extracting a plant material with a carbon-dioxide-containing solvent, filtering off insoluble matter and removing the solvent; a flavor as an oil or a concentrated aqueous solution collected by concentrating juice while introducing aroma component that effuses with water into a collector; an extract obtained by contacting a plant or animal material with various solvents to extract a necessary flavor component from the material, remove these solvent if necessary and concentrate the flavor component; an isolated flavor by purifying a compound from a mixture; a cooked flavor produced by heating a food material; an enzyme modified flavor produced through biochemical reaction using dairy material, protein or fat as a substrate. Examples of other flavors include chemically synthesized flavors such as amyl acetate, benzyl alcohol, geraniol and phenylethyl alcohol. Examples of natural flavor sources include dried bonito extract, tangle weed extract, crab extract, oyster extract, beef extract, chicken extract, pork extract, onion extract, carrot extract, orange juice, lemon juice, grapefruit juice and the like. These sources may be used alone or two or more of these sources may be used in combination.
Any blended flavor obtained by suitably selecting and mixing these sources may be used.

Preferable flavors include, flavors such as essential oils and oleoresins, synthetic flavors such as 1-menthol, citral, geraniol and vanillin, citrus flavors such as orange, lemon and grapefruit, fruit flavors such as apple, banana, grape, peach, strawberry, melon and pineapple, mint flavors such as peppermint and spearmint, spice flavors such as pepper, cinnamon, nutmeg and clove, nut flavors such as vanilla, coffee, cocoa and hazelnut, cooked or uncooked meat/seafood flavors such as beef, pork, chicken, salmon, crab and shrimp, tea flavors such as black tea, green tea and oolong tea, and dairy flavors such as milk, cheese and butter.

Next, carriers that partially consist the granulated flavor will be described.

Carriers are preferably hydrophilic, including hydrophilic proteins such as gelatin, casein, casein sodium, whey protein, powdered skimmed milk, powdered whole milk, albumin; hydrophilic polysaccharides such as maltodextrin, modified starch (acid digested starch, oxidized starch, pregelatinized starch, grafted starch, etherified starch, esterified starch obtained by reacting with acetic acid, phosphoric acid or the like), alginate, acacia gum, soybean polysaccharide, guar gum, xanthan gum, pectin, carboxymethyl cellulose and agarose; partially hydrolyzed proteins such as HAP and HVP; partially decomposed starches such as oligosaccharide; and saccharides such as lactose. In addition to these substance, a carrier may also contain at least one of organic acids such as acetic acid and citric acid, salts used for general food such as sodium chloride and potassium chloride, and the like.

More specifically, examples include monosaccharides such as glucose and fructose, oligosaccharides such as sucrose, maltose and trehalose, polysaccharides such as starch and modified starch, and proteins such as casein, gelatin and whey protein.

A powdered flavor used as a raw material in the present invention is those that are prepared by known process. Specifically, a powdered flavor obtained through a known methods such as spray drying and absorption process can be used as the raw material.

Spray drying for producing a powdered flavor can be any methods known prior to the present application. Although a typical process is described herein, the present invention is not limited to this process. Specifically, first, water, a carrier selected from the above-mentioned carriers and, if necessary, an emulsifier are mixed, heated and sterilized. Then, a pre-weighed flavor is added, agitated and mixed using a mixer such as a TKmixer to emulsify the mixture. The obtained emulsion is spray dried with a spray drier followed by sieving to obtain the powdered flavor.

Absorption process for producing a powdered flavor can be any methods known prior to the present application. A typical process includes mixing and absorbing a carrier selected from the above-mentioned carriers with a pre-weighed flavor to obtain a powdered flavor.

The above-described powdered flavor is compacted with rollers. In general, the powdered flavor is fed between the rollers for compaction. The means for feeding the powdered flavor is not particularly limited. For example, a horizontal screw is preferably used to feed the powdered flavor. The powdered flavor fed between the rollers is firmly compacted by the rotation of the rollers. As the rollers continue to rotate, a plate-like matter comes out from the gap between the rollers. The plate-like matter needs to be firmly compacted such that it is partially in a melted form. Herein, the plate-like matter refers to a wide zonate with a constant thickness or an equivalent thereof. A "partially melted plate-like matter" refers to a plate-like matter that is not totally melted so that it can still hold itself. In other words, the surface of the plate-like matter is partially or fully in a viscous state while the inside is hard enough to support itself so that there is no need of depending on use of other support to proceed to the next step.

In order to obtain the above-described plate-like matter in a partially melting state, it is requisite to firmly compact the powdered flavor. Although it depends on the materials used for the powdered flavor, the roller compression pressure on the powdered flavor is generally 15 N/cm or greater, or even preferably 20 N/cm or greater to obtain favorable results. In the specification, the word "compress" has a broad meaning such that it includes the word "compact". The upper limit of the roller compression pressure is, although depending on the compressor used for the powdered flavor, for example, about 60 N/cm. The term "roller compression pressure" refers to the performance of the rollers, that is, a compressive load per unit compression width upon compressing the powdered flavor with the rollers.

The roller compression pressure (N/cm) may be calculated by dividing the force put upon the rollers (N) with the effective length of the rollers (cm) (the length of the rollers that makes contact with and compacts the powdered flavor), where the force put upon the roller (N) is the product of the hydraulic pressure (gauge pressure) of the rollers (N/cm²) and the cross-sectional area (cm²) of the supporting rod.

According to the present invention, preferable conditions for compacting the powdered flavor depend on the materials used for the powdered flavor to be compacted, the amount of the powdered flavor fed between the rollers, the gap between the rollers, the compression pressure of the rollers and the revolution of the rollers. For example, the revolution of the screw for feeding the powdered flavor between the rollers may be 10-20 rpm while the compression pressure of the rollers may be 15 N/cm or greater, and more favorable results can be obtained when the compression pressure of the rollers is 20 N/cm or greater and the revolution of the rollers is 12-20 rpm.

Then, the partially melted plate-like matter is cooled down. Ambient air around the plate-like matter may be utilized to cool down the plate-like matter but preferably the plate-like matter is actively cooled down by being blown with air or cooled air utilizing a fan or the like. Subsequently, the cooled plate-like matter is ground and granulated. Any method may be used as long as the above-described objectives are achieved.

According to the present invention, the powdered flavor is preferably pressed prior to the firm compaction process with the rollers. Specifically, the powdered flavor is preferably forced to free-fall by its own weight and then conveyed with the horizontal screw, thereby pressing and preferablyd deaerating the powdered flavor. Deaerating is preferably performed in the step of conveying the flavor with the horizontal screw. When deaeration is done in this step, the following process can proceed smoothly.

Thus, the granulated flavor of the invention is prepared. The granulated flavor of the invention can be used if the moisture content is 15% or less by weight, preferably 10% or less by weight.

When the granulated flavor of the invention with a high moisture content is blended with a product that tends to uptake moisture and added with a considerable amount of amino acids, carbohydrate and organic acid, such as a powdered beverage (powdered tea, powdered juice, powdered soup) or a powdered seasoning (powdered chemical seasoning, powdered broth, powdered soybean sauce, powdered sauce), the whole product cakes, rendering itself commercially unworthy. Therefore, it is necessary to control the moisture content of the granulated matter to be added. Although the lower moisture content is the better, the minimum limit is practically about 0.5% by weight.

The moisture content may be determined using a known method. As common methods, Karl Fischer methods are known, which are detailed in the Japanese Pharmacopoeia. According to the present invention, a Karl Fischer moisture meter (Kyoto Electronics Manufacturing Co. Ltd.: MKA-210) is used to measure the moisture according to the Japanese Pharmacopoeia.

The granulated flavor obtained by the invention gives favorable results when its hardness is 1 N/mm²-50 N/mm². If the hardness is lower than 1 N/mm², the granulated flavor is likely to crumble and be fragile to external force, and thus difficult to maintain the form of the granule. If the hardness is greater than 50 N/mm², the solubility of the obtained granulated flavor becomes low, which not only prevents a high flavor content but also increases production cost. Regarding the flavor content and production cost, the hardness of the granulated flavor is preferably about 1 N/mm²- about 10 N/mm², and more preferably about 1 N/mm²- about 5 N/mm².

According to the present invention, the hardness can be measured by a known method. Specifically, a particle hardness tester Model Type GM (Okada Seiko Co., Ltd.) was used. A granulated flavor whose hardness is to be measured is selected, put under an increasing load at a constant speed and calculate the hardness based on the load at which the form of the granulated flavor breaks down. Although the granulated flavor of the invention is very hard, it is soluble and thus rapidly dissolves in the presence of moisture.

Preferably, the granulated flavor of the invention contains particles with a size of 105 µm-2 mm for 85% or more by weight. More preferably, the granulated flavor of the invention contains particles with a size of 105 µm-2 mm for 90% or more by weight. However, preferable particle sizes depend on the usage of the granulated flavor of the invention. For example, in the case of a powdered beverage whose major ingredients are granulated sugar, citric acid and a powdered flavor, when the difference among the particle sizes of these ingredients is great, they may cause undesirable classification resulting in a problem of unevenness. Therefore, a granulated flavor having a particle size closer to that of the granulated sugar is required, in this case the granulated flavor with a particle size of preferably 2.0 mm-500 µm, more preferably 2 mm-1 mm is used. In the case of a powdered seasoning that is separately packed and used with an instant noodle, which contains chemical seasonings, meat extract powder, vegetable powder and the like, the granulated flavor with a particle size of preferably 1 mm-105 µm, more preferably 500 µm-105 µm is used.

Particle size distribution is measured using a JIS standard sieve and separated by particle sizes of 2. 0 mm or larger, 2.0-1.0 mm, 1.0 mm-500 µm, 500 µm-250 µm, 250 µm-105 µm and 105 µm or smaller.

Since the granulated flavor obtained according to the present invention is provided, for example, in a soft capsule, a paper tube or a soup package attached with an instant noodle, it is beneficial that the relative density of the powder is as high as possible for compact packaging. Specifically, the apparent density of the granulated flavor obtained by the invention is preferably 1 g/cm²-0.81 g/cm². The method for determining the apparent density is known. According to the present invention, a powder tester (Hosokawa Micron Corporation) is used to determine the apparent density (g/cm²).

Examples of food products that can be blended with the granulated flavor obtained by the invention include, but not limited to, beverages, powdered beverages, confectionery products such as candy, chewing-gum, tablet candy, chocolate and snacks, desserts such as yogurt and ice-cream, meat/seafood products, powdered seasonings, food such as powdered food (e. g. , fillings for rice in hot tea) and precooked products to be heated in a microwave oven (frozen food, pouch-packed food). An amount of the granulated flavor of the invention in a product is not particularly limited and depends on the product and the granulated flavor used.

### EXAMPLES

Hereinafter, the present invention will be described more specifically by way of Examples, Comparative Examples, Application Examples and Test Examples. However, the present invention is not in any way limited to these examples.

### Example 1

Ten kg of trehalose (Hayashibara Shoji, Inc.) was blended with 100 g of color materials agents (Yellow No.4) and then mixed and absorbed with 0.2 kg of lemon flavor (Takasago International Corporation), thereby obtaining an absorbed powdered flavor. This absorbed powdered flavor was forced to free-fall in a feed hopper, horizontally conveyed using a horizontal screw at a screw revolution of 15 rpm to be fed between the compression rollers. The powdered flavor was compacted at a roller compression pressure of 25 N/cm, a roller gap of 0.5 mm and a roller revolution of 15 rpm to obtain a plate-like matter. The plate-like matter was cooled with cold air. The cooled plate-like matter was ground with a rotary grinding machine and evened the size, thereby obtaining a granulated matter.

### Comparative Example 1

Ten kg of trehalose (Hayashibara Shoji, Inc.) was blended with 100 g of color materials agents (Yellow No. 4) and then mixed and absorbed with 0.2 kg of lemon flavor (Takasago International Corporation), thereby obtaining an absorbed powdered flavor.

### Comparative Example 2

Ten kg of trehalose (Hayashibara Shoji, Inc.) was blended with 100 g of color materials agents (Yellow No. 4) and then mixed and absorbed with 0.2 kg of lemon flavor (Takasago International Corporation), thereby obtaining an absorbed powdered flavor. This absorbed powdered flavor was forced to free-fall in a feed hopper, horizontally conveyed using a horizontal screw at a screw' revolution of 48 rpm to be fed between the compression rollers. The powdered flavor was compressed at a roller compression pressure of 7 N/cm, a roller gap of 0. 5 mm and a roller revolution of 15 rpm to obtain a plate-like matter. The plate-like matter was ground without cooling with a rotary grinding machine and evened the size, thereby obtaining a granulated matter.

### Example 2

Ten kg of anhydrous crystalline maltose (Hayashibara Shoji, Inc.) was mixed and absorbed with 1 kg of menthol flavor (Takasago International Corporation), thereby obtaining an absorbed powdered flavor. This absorbed powdered flavor was forced to free-fall in a feed hopper, horizontally conveyed using a horizontal screw at a screw revolution of 15 rpm to be fed between the compression rollers. The powdered flavor was compacted at a roller compression pressure of 25 N/cm, a roller gap of 0.5 mm and a roller revolution of 15 rpm to obtain a plate-like matter. The plate-like matter was cooled with cold air. The cooled plate-like matter was ground with a rotary grinding machine and evened the size, thereby obtaining a granulated matter.

### Comparative Example 3

Ten kg of anhydrous crystalline maltose (Hayashibara Shoji, Inc.) was mixed and absorbed with 1 kg of menthol flavor (Takasago International Corporation), thereby obtaining an absorbed powdered flavor.

### Comparative Example 4

Ten kg of anhydrous crystalline maltose (Hayashibara Shoji, Inc.) was mixed and absorbed with 1 kg of menthol flavor (Takasago International Corporation), thereby obtaining an absorbed powdered flavor. This absorbed powdered flavor was forced to free-fall in a feed hopper, horizontally conveyed using a horizontal screw at a screw revolution of 48 rpm to be fed between the compression rollers. The powdered flavor was compressed at a roller compression pressure of 7 N/cm, a roller gap of 0.5 mm and a roller revolution of 15 rpm to obtain a plate-like matter. The plate-like matter was ground without cooling with a rotary grinding machine and evened the size, thereby obtaining a granulated matter.

### Example 3

Ten kg of anhydrous crystall ine maltose (Hayashibara Shoji, Inc.) was mixed and absorbed with 0.5 kg of lemon flavor (Takasago International Corporation), thereby obtaining an absorbed powdered flavor. This absorbed powdered flavor was forced to free-fall in a feed hopper, horizontally conveyed using a horizontal screw at a screw revolution of 15 rpm to be fed between the compression rollers. The powdered flavor was compacted at a roller compression pressure of 25 N/cm, a roller gap of 0.5 mm and a roller revolution of 15 rpm to obtain a plate-like matter. The plate-like matter was cooled with cold air. The cooled plate-like matter was ground with a rotary grinding machine and evened the size, thereby obtaining a granulated matter.

### Comparable Example 5

Ten kg of anhydrous crystalline maltose (Hayashibara Shoji, Inc.) was mixed and absorbed with 0.5 kg of lemon flavor (Takasago International Corporation), thereby obtaining an absorbed powdered flavor.

### Comparable Example 6

Ten kg of anhydrous crystalline maltose (Hayashibara Shoji, Inc.) was mixed and absorbed with 0.5 kg of lemon flavor (Takasago International Corporation), thereby obtaining an absorbed powdered flavor. This absorbed powdered flavor was forced to free-fall in a feed hopper, horizontally conveyed using a horizontal screw at a screw revolution of 48 rpm to be fed between the compression rollers. The powdered flavor was compressed at a roller compression pressure of 7 N/cm, a roller gap of 0.5 mm and a roller revolution of 15 rpm to obtain a plate-like matter. The plate-like matter was ground without cooling with a rotary grinding machine and evened the size, thereby obtaining a granulated matter.

### Example 4

Ten kg of anhydrous crystalline maltose (Hayashibara Shoji, Inc.) was mixed and absorbed with 0.2 kg of apple flavor (Takasago International Corporation), thereby obtaining an absorbed powdered flavor. This absorbed powdered flavor was forced to free-fall in a feed hopper, horizontally conveyed using a horizontal screw at a screw revolution of 15 rpm to be fed between the compression rollers. The powdered flavor was compacted at a roller compression pressure of 25 N/cm, a roller gap of 0.5 mm and a roller revolution of 15 rpm to obtain a plate-like matter. The plate-like matter was cooled with cold air. The cooled plate-like matter was ground with a rotary grinding machine and evened the size, thereby obtaining a granulated matter.

### Comparative Example 7

Ten kg of anhydrous crystalline maltose (Hayashibara Shoji, Inc.) was mixed and absorbed with 0.2 kg of apple flavor (Takasago International Corporation), thereby obtaining an absorbed powdered flavor.

### Comparative Example 8

Ten kg of anhydrous crystalline maltose (Hayashibara Shoji, Inc.) was mixed and absorbed with 0.2 kg of apple flavor (Takasago International Corporation), thereby obtaining an absorbed powdered flavor. This absorbed powdered flavor was forced to free-fall in a feed hopper, horizontally conveyed using a horizontal screw at a screw revolution of 48 rpm to be fed between the compression rollers. The powdered flavor was compressed at a roller compression pressure of 7 N/cm, a roller gap of 0.5 mm and a roller revolution of 15 rpm to obtain a plate-like matter. The plate-like matter was ground without colling with a rotary grinding machine and evened the size, thereby obtaining a granulated matter.

### Example 5

Ten kg of sorbitol (Merck Ltd., Japan) was mixed and absorbed with 0.2 kg of apple flavor (Takasago International Corporation), thereby obtaining an absorbed powdered flavor. This absorbed powdered flavor was forced to free-fall in a feed hopper, horizontally conveyed using a horizontal screw at a screw revolution of 15 rpm to be fed between the compression rollers. The powdered flavor was compacted at a roller compression pressure of 25 N/cm, a roller gap of 0. 5 mm and a roller revolution of 15 rpm to obtain a plate-like matter. The plate-like matter was cooled with cold air. The cooled plate-like matter was ground with a rotary grinding machine and evened the size, thereby obtaining a granulated matter.

### Comparative Example 9

Ten kg of sorbitol (Merck Ltd., Japan) was mixed and absorbed with 0.2 kg of apple flavor (Takasago International Corporation), thereby obtaining an absorbed powdered flavor.

### Comparative Example 10

Ten kg of sorbitol (Merck Ltd., Japan) was mixed and absorbed with 0.2 kg of apple flavor (Takasago International Corporation), thereby obtaining an absorbed powdered flavor. This absorbed powdered flavor was forced to free-fall in a feed hopper, horizontally conveyed using a horizontal screw at a screw revolution of 48 rpm to be fed between the compression rollers. The powdered flavor was compressed at a roller compression pressure of 7 N/cm, a roller gap of 0. 5 mm and a roller revolution of 15 rpm to obtain a plate-like matter. The plate-like matter was ground without cooling with a rotary grinding machine and evened the size, thereby obtaining a granulated matter.

The powders obtained as described above were evaluated as follows.

### Application Example 1: Production of chewing-gums containing the granulated flavors

To 100 g of chewing-gum base (Takasago International Corporation), 5 g of the powdered flavor obtained in Comparable Example 1, and 5 g each of the granulated flavors obtained in Comparable Example 2 and Example 1 were blended and mixed at about 50°C, respectively. After cooling, they were roll-molded with rollers, thereby obtaining three types of 3 g stick gums.

### Test Example 1: Examination of the form of the granulated flavors

The stick gums obtained in Application Example 1 were examined. The granulated flavor obtained in Example 1 generally maintained its form in the stick gum. On the other hand, considerable amounts of the powdered flavor from Comparative Example 1 and the granulated flavor from Comparative Example 2 lost their forms in the stick gums.

### Test Example 2: Sensory evaluation of the granulated flavors

The stick gums obtained in Application Example 1 were subjected to sensory evaluation on the following basis. Ten specialized panelists participated in the sensory evaluation to evaluate aroma and taste of the stick gums, which were imparted by the granulated flavors added therein. The intensity of the flavor release and the total judgment of the taste of the stick gums were made at 15 seconds, 30 seconds, 1 minute and every 1 minute until 5 minutes after the beginning of chewing the stick gums. The intensity of the flavor release was evaluated on the grade of four scale (i.e., weak, rather weak, rather strong, strong) while the taste was evaluated as tasty or not tasty. The results of the evaluation are shown in Table 1.

**Table 1**

| Granulated flavor | Total judgment | Release (Intensity of the flavor released from the gum base) | | |
|---|---|---|---|---|
| | | Early | Middle | Later |
| Comparative Example 1 | Not tasty (10) Tasty (0) | Weak | Rather strong | Rather strong |
| Comparative Example 2 | Not tasty (7) Tasty (3) | Rather weak | Rather strong | Rather strong |
| Example 1 | Not tasty (1) Tasty (9) | Strong | Rather strong | Rather weak |

In Table 1, "Early" means 0-1 minute, "Middle" means from after 1 minute till 3 minutes and "Later" means from after 3 minutes till 5 minutes after the beginning of chewing.

From the results of the total judgment of tastes shown in Table 1, the stick gum containing the granulated flavor obtained in Example 1 was sensed tasty. Presumed reasons for this result is that the stick gum containing the granulated flavor obtained in Example 1 releases the lemon freshness flavor immediately after the beginning of chewing while the stick gums containing the powdered flavor obtained in Comparative Example 1 and the granulated flavor obtained in Comparative Example 2 take time to release the flavors and the intensities of their releases are,weaker. Presumably, as observed in previous Test Example 1, since the powders from Example 1 remain their forms in the stick gum, the flavor is retained in the granulated flavor, and thus the flavor release is effective upon chewing the stick gum.

### Test Example 3: Fragility Endurance test of the granulated flavors

The granulated flavors obtained in Comparative Examples and Examples shown in Table 2 were put in tubular containers (diameter: 6 cm, height: 10 cm) for 50 g, respectively. The containers were shaken with a reciprocating vibrator at a stroke of 4 cm and a vibration frequency of 160/min. for 120 minutes. The particle sizes before and after the vibration were measured using a JIS standard sieve to determine the fragility of the granulated flavors. The results are shown in Table 2.

**Table 2**

| Granulated flavor | Particle size before vibration | Particle size after vibration |
|---|---|---|
| Comparative Example 4 | 1.7 mm-1mm products | 1 mm or smaller products 32.7% |
| Example 2 | 1.7 mm-1mm products | 1 mm or smaller products 17.5% |
| Comparative Example 2 | 1.7 mm-1mm products | 1 mm or smaller products 10.0% |
| Example 1 | 1.7 mm-1mm products | 1 mm or smaller products 6.0% |

### Test Example 4 : Storage stability of the granulated flavors

The powdered flavor obtained in Comparative Example 1 and the granulated flavors obtained in Comparative Example 2 and Example 1 were stored in a thermostatic chamber at 60°C. At one week and two weeks after the storage, the aromas of the granulated flavors were evaluated by the specialized panelists. The results of the evaluation are shown in Table 3.

**Table 3**

| | At one week | At two weeks |
|---|---|---|
| Comparative Example 1 | Great change (10 panelists) | Great change (aroma faded away/weak) (10 panelists) |
| Comparative Example 2 | Some change (9 panelists) | Recognize oxidization deterioration (9 panelists) |
| Example 1 | No change (10 panelists) | Almost no change (9 panelists) |

Referring to Table 3, the powdered flavor from Comparative Example 1 almost lost its aroma in the powdered flavor after 2 weeks and thus became worthless as a product. The granulated flavor from Comparative Example 2 was inferior to the granulated flavor from Example 1 in stability. This proves that the compression step at high pressure in the production process of the granulated flavor deaerates and densifies the matrix of the granulated flavor, which prevents air oxidation and aroma lost.

### Test Example 5: Hardness of the granulated flavors

The granulated flavors obtained in Comparative Examples and Examples indicated in Table 4 were placed on a sample table and subjected to increasing load at a speed of 100 µm/sec to determine the load peak values at which the granulated flavors lose their forms. The values were applied into a certain formula 4P/ (n x D x D) to calculate the hardness of the granulated flavors. In the formula, P represents the load peak value and D represents the particle size of the granulated flavor. The results are shown in Table 4.

**Table 4**

| Granulated flavor | Hardness mN/mm² |
|---|---|
| Example 1 | 1992 |
| Comparative Example 2 | 176 |
| Example 2 | 1293 |
| Comparative Example 4 | 644 |
| Example 3 | 1358 |
| Comparative Example 6 | 801 |
| Example 4 | 4885 |
| Comparative Example 8 | 882 |

### Test Example 6: Distribution of particle sizes of the granulated flavors

The distributions of the particle sizes of the granulated flavors prepared in Examples and Comparative Examples indicated in Table 5 were determined using a JIS standard sieve. The results are shown in Table 5.

**Table 5**

| Granulated flavor | 2 mm or larger | 2mm to 1mm | 1mm to 500 µm | 500 µm to 250 µm | 250 µm to 105 µm | 105 µm or smaller |
|---|---|---|---|---|---|---|
| Example 1 | 0.9 | 67.6 | 16.9 | 6.8 | 4.9 | 2.9 |
| Comparative Example 4 | 10.7 | 4.9 | 7.6 | 11.3 | 53.5 | 12.0 |
| Example 5 | 3.5 | 54.5 | 19.8 | 7.9 | 7.0 | 7.3 |
| Comparative Example 10 | 1.4 | 39.2 | 18.8 | 6.1 | 11.7 | 22.8 |

From these results, the proportions of small particle sizes of the granulated flavors of the invention are less than those of the granulated flavors from the Comparative Examples. This proves that the granulated flavors of the invention have a higher granulation yield and thus useful in terms of industrial use.

### Example 6

First, 15 kg of water, 8.9 kg of dextrin (Matsutani Chemical Industry Co., Ltd.) as a carrier and 0.1 kg of emulsifier (polyglycerine fatty acid ester) were dissolved, to which 1 kg of lemon oil (Takasago International Corporation) was added as a flavor. A TK mixer was used for agitation and mixing to obtain an emulsion. The emulsion was spray dried with a spray drier (inlet temperature: 180°C, outlet temperature: 90°C) to obtain a powdered flavor. The powdered flavor was forced to free-fall in a feed hopper, horizontally conveyed using a horizontal screw at a screw revolution of 15 rpm to be fed between the compression rollers. The powdered flavor was compacted at a roller compression pressure of 25 N/cm, a roller gap of 0.5 mm and a roller revolution of 15 rpm to obtain a plate-like matter. The plate-like matter was cooled with cold air. The cooled plate-like matter was ground with a rotary grinding machine and evened the size, thereby obtaining a granulated matter.

### Comparative Example 11

First, 15 kg of water, 8.9 kg of dextrin as a carrier and 0.1 kg of emulsifier (polyglycerine fatty acid ester) were dissolved, to which 1 kg of lemon oil (Takasago International Corporation) was added as a flavor. A TK mixer was used for agitation and mixing to obtain an emulsion. The emulsion was spray dried with a spray drier (inlet temperature: 180°C, outlet temperature: 90°C) to obtain a powdered flavor. The powdered flavor was forced to free-fall in a feed hopper, horizontally conveyed using a horizontal screw at a screw revolution of 48 rpm to be fed between the compression rollers. The powdered flavor was compacted at a roller compression pressure of 7 t on/cm, a roller gap of 0. 5 mm and a roller revolution of 15 rpm to obtain a plate-like matter. The plate-like matter was ground without cooling with a rotary grinding machine and evened the size, thereby obtaining a granulated matter.

### Example 7

To 10 kg of powdered skimmed milk (Meiji Dairies Corporation), 0.2 kg of milk flavor (Takasago International Corporation) was pre-absorbed to obtain an absorbed powdered flavor. This absorbed powdered flavor was forced to free-fall in a feed hopper, horizontally conveyed using a horizontal screw at a screw revolution of 15 rpm to be fed between the compression rollers. The powdered flavor was compacted at a roller compression pressure of 25 N/cm, a roller gap of 0.5 mm and a roller revolution of 15 rpm to obtain a plate-like matter. The plate-like matter was cooled with cold air. The cooled plate-like matter was ground with a rotary grinding machine and evened the size, thereby obtaining a granulated matter.

### Example 9

After mixing 4.9 kg of acacia gum (Takasago International Corporation), 4.9 kg of dextrin (Matsutani Chemical Industry Co., Ltd.) and 0.2 kg of gelatin (Nitta Gelatin Inc.), 0.2 kg of pepper mint flavor (Takasago International Corporation) was added and mixed to absorb, thereby obtaining an absorbed powdered flavor, This absorbed powdered flavor was forced to free-fall in a feed hopper, horizontally conveyed using a horizontal screw at a screw revolution of 15 rpm to be fed between the compression rollers. The powdered flavor was compacted at a roller compression pressure of 25 N/cm, a roller gap of 0.5 mm and a roller revolution of 15 rpm to obtain a plate-like matter. The plate-like matter was cooled with cold air. The cooled plate-like matter was ground with a rotary grinding machine and evened the size, thereby obtaining a granulated matter.

### Example 9

After mixing 7.0 kg of dextrin (Takasago International Corporation), 2.8 kg of modified starch (Matsutani Chemical Industry Co., Ltd.) and 0.2 kg of carboxymethyl cellulose (Shin-Etsu Chemical Co., Ltd.), 0.2 kg of coffee flavor (Takasago International Corporation) was added and mixed to absorb, thereby obtaining an absorbed powdered flavor. This absorbed powdered flavor was forced to free-fall in a feed hopper, horizontally conveyed using a horizontal screw at a screw revolution of 15 rpm to be fed between the compression rollers. The powdered flavor was compacted at a roller compression pressure of 25 N/cm, a roller gap of 0.5 mm and a roller revolution of 15 rpm to obtain a plate-like matter. The plate-like matter was cooled with cold air. The cooled plate-like matter was ground with a rotary grinding machine and evened the size, thereby obtaining a granulated matter.

The granulated coffee flavor obtained in Example 9 was used to prepare a coffee soft candy having the following composition.

| Ingredients | Composing amount (part weight) |
|---|---|
| Granulated coffee flavor | 0.3 |
| Starch syrup | 900 |
| Granulated sugar | 600 |
| Lactose | 100 |
| hydrogenated vegetable oil | 100 |
| Fondant | 100 |
| Gelatin | 10 |
| Lecithin | 1 |

### Example 10

Aftermixing 9.8 kg of dextrin (Matsutani Chemical Industry Co., Ltd.) and 0.2 kg of casein (Taiyo Kagaku Co., Ltd.), 0.2 kg of black tea flavor (Takasago International Corporation) was added and mixed to absorb, thereby obtaining an absorbed powdered flavor. This absorbed powdered flavor was forced to free-fall in a feed hopper, horizontally conveyed using a horizontal screw at a screw revolution of 15 rpm to be fed between the compression rollers. The powdered flavor was compacted at a roller compression pressure of 25 N/cm, a roller gap of 0.5 mm and a roller revolution of 15 rpm to obtain a plate-like matter. The plate-like matter was cooled with cold air. The cooled plate-like matter was ground with a rotary grindingmachine and evened the size, thereby obtaining a granulated matter.

### Example 11

After mixing 5.0 kg of powdered skimmed milk (Morinaga Milk Industry Co., Ltd.) and 5.0 kg of powdered whole milk (Morinaga Milk Industry Co., Ltd.), 0.2 kg of butter flavor (Takasago International Corporation) was added and mixed to absorb, thereby obtaining an absorbed powdered flavor. This absorbed powdered flavor was forced to free-fall in a feed hopper, horizontally conveyed using a horizontal screw at a screw revolution of 15 rpm to be fed between the compression rollers. The powdered flavor was compacted at a roller compression pressure of 25 N/cm, a roller gap of 0. 5 mm and a roller revolution of 15 rpm to obtain a plate-like matter. The plate-like matter was cooled with cold air. The cooled plate-like matter was ground with a rotary grinding machine and evened the size, thereby obtaining a granulated matter.

The granulated butter flavor obtained in Example 11 was used to prepare a butter bread having the following composition.

| Ingredients | Composing amount (part weight) |
|---|---|
| Granulated butter flavor | 0.1 |
| Strong flour | 100 |
| Shortening | 5 |
| Sugar | 5 |
| Wet yeast | 2.5 |
| Salt | 2.1 |
| Powdered skimmed milk | 2 |
| Water | 67 |

### Example 12

To 10.0 kg of trehalose (Hayashibara Shoji, Inc.), 0.2 kg of meat flavor (Takasago International Corporation) was added and mixed to absorb, thereby obtaining an absorbed powdered flavor. This absorbed powdered flavor was forced to free-fall in a feed hopper, horizontally conveyed using a horizontal screw at a screw revolution of 15 rpm to be fed between the compression rollers. The powdered flavor was compacted at a roller compression pressure of 25 N/cm, a roller gap of 0.5 mm and a roller revolution of 15 rpm to obtain a plate-like matter. The plate-like matter was cooled with cold air. The cooled plate-like matter was ground with a rotary grinding machine and evened the size, thereby obtaining a granulated matter.

The granulated meat flavor obtained in Example 12 was used to prepare a meat patty having the following composition.

| Ingredients' | Composing amount (part weight) |
|---|---|
| Granulated meat flavor | 0.5 |
| Minced meat | 650 |
| Onion | 200 |
| Bread crumb | 40 |
| Egg white | 30 |
| Salt | 10 |
| Pepper | 10 |

### Example 13

To 10.0 kg of sorbitol (Merck Ltd., Japan), 0.2 kg of orange flavor (Takasago International Corporation) was added and mixed to absorb, thereby obtaining an absorbed powdered flavor. This absorbed powdered flavor was forced to free-fall in a feed hopper, horizontally conveyed using a horizontal screw at a screw revolution of 15 rpm to be fed between the compression rollers. The powdered flavor was compacted at a roller compression pressure of 25 N/cm, a roller gap of 0.5 mm and a roller revolution of 15 rpm to obtain a plate-like matter. The plate-like matter was cooled with cold air. The cooled plate-like matter was ground with a rotary grinding machine and evened the size, thereby obtaining a granulated matter.

The granulated orange flavor obtained in Example 13 was used to prepare a powdered orange juice having the following composition.

| Ingredients | Composing amount (part weight) |
|---|---|
| Granulated orange flavor | 0.1 |
| Granulated sugar | 7.1 |
| Anhydrous citric acid | 0.7 |
| Powdered orange juice | 0.1 |

According to the present invention, granulated flavors having stronger hardness than ever were obtained. Furthermore, the granulated flavors of the invention not only have a great stability of aroma and flavor, capable of retaining the form of the powder and having less fragile property but also have good solubility.

The granulated flavors of the invention retains the flavor within the powder against an external force while releasing the flavor when needed. The form of the granulated flavors of the invention is highly durability to vibration and retains their form upon vibration that may occur during transportation on trucks for distribution of goods containing the granulated flavors and upon physical impact that may occur during production of foods containing the granulated flavors, thereby preventing the commercial products from significantly deteriorating their values. Moreover, the present invention produces a high yield of granulated flavors with desired particle sizes and with good granulation yield, and thus extremely useful for industrial use.

## Claims

1. A method for producing a granulated flavor, comprising:
compacting a powdered flavor prepared from raw materials containing flavor and a carrier with rollers to obtain a partially melted plate-like matter;
cooling the plate-like matter; and
grinding and granulating the cooled plate-like matter.

2. A method for producing a granulated flavor, comprising:
forcing a powdered flavor prepared from raw materials containing a flavor and a carrier to free-fall;
conveying the powdered flavor with a horizontal screw to obtain a pressed powdered flavor;
compacting the pressed powdered flavor with rollers to obtain a partially melted plate-like matter;
cooling the plate-like matter; and
grinding and granulating the cooled plate-like matter.

3. A granulated flavor for use in foods and beverages obtained by cooling a partially melted plate-like matter and then grinding and granulating the cooled plate -like matter, which contains a carrier selected from a group consisting of hydrophilic proteins, maltodextrin, starches, modified starches, hydrophilic polysaccharides, partially hydrolyzed proteins, partially decomposed starches and saccharides, wherein the granulated flavor has a moisture content of 10% or less by weight and a hardness of 1 N/mm²-50 N/mm².

4. A granulated flavor for use in foods and beverages according to claim 3 containing particles having a particle size of 105 µm-2 mm, wherein the proportion of the particles having that particle size is 85% or more by weight.

5. A food or beverage comprising the granulated flavor for use in foods and beverages of claims 3 or 4.

## Patentansprüche

1. Verfahren zur Herstellung eines granulierten Geschmacksstoffs, umfassend:
Verdichten eines pulverförmigen Geschmacksstoffs, der aus Ausgangsmaterialien hergestellt ist, die einen Geschmacksstoff und einen Träger umfassen, mit Walzen, um ein teilweise geschmolzenes plattenähnliches Material zu erhalten;
Kühlen des plattenähnlichen Materials; und
Zerkleinern und Granulieren des gekühlten plattenähnlichen Materials.

2. Verfahren zur Herstellung eines granulierten Geschmacksstoffs, umfassend:
Verursachen, dass ein pulverförmiger Geschmacksstoff, hergestellt aus Ausgangsmaterialien, die einen Geschmacksstoff und einen Träger umfassen, frei fällt;
Befördern des pulverförmigen Geschmacksstoffs mit einer horizontalen Schnecke, um einen gepressten pulverförmigen Geschmacksstoff zu erhalten;
Verdichten des gepressten pulverförmigen Geschmacksstoffs mit Walzen, um ein teilweise geschmolzenes plattenähnliches Material zu erhalten; Kühlen des plattenähnlichen Materials; und
Zerkleinern und Granulieren des gekühlten plattenähnlichen Materials.

3. Granulierter Geschmacksstoff zur Verwendung in Speisen und Getränken, erhalten durch Kühlen eines teilweise geschmolzenen plattenähnlichen Materials und dann Zerkleinern und Granulieren des gekühlten plattenähnlichen Materials, das einen Träger umfasst, der aus der Gruppe, bestehend aus hydrophilen Proteinen, Maltodextrin, Stärke, modifizierter Stärke, hydrophilen Polysacchariden, teilweise hydrolysierten Proteinen, teilweise zersetzter Stärke und Sacchariden, ausgewählt ist, worin der granulierte Geschmacksstoff einen Feuchtigkeitsgehalt von 10 Gew.% oder weniger und eine Härte von 1 bis 50 N/mm² aufweist.

4. Granulierter Geschmacksstoff zur Verwendung in Speisen und Getränken gemäss Anspruch 3, der Partikel mit einer Partikelgrösse von 105 µm bis 2 mm umfasst, worin der Anteil der Partikel mit dieser Partikelgrösse 85 Gew.% oder mehr beträgt.

5. Speise oder Getränk, umfassend den granulierten Geschmacksstoff zur Verwendung in Speisen und Getränken gemäss Ansprüchen 3 oder 4.

## Revendications

1. Procédé pour produire un arôme en granulés, comprenant les étapes consistant à:
compacter un arôme en poudre, préparé à partir de matières premières contenant un arôme et un support, avec des rouleaux pour obtenir une matière lamelliforme partiellement fondue ;
refroidir la matière lamelliforme ; et
broyer et granuler la matière lamelliforme refroidie.

2. Procédé pour produire un arôme en granulés, comprenant les étapes consistant à:
forcer un arôme en poudre préparé à partir de matières premières contenant un arôme et un support à tomber librement ;
transporter l'arôme en poudre avec une vis horizontale pour obtenir un arôme en poudre pressé ;
compacter l'arôme en poudre pressé avec des rouleaux pour obtenir une matière lamelliforme partiellement fondue ; refroidir la matière lamelliforme ; et
broyer et granuler la matière lamelliforme refroidie.

3. Arôme en granulés pour l'utilisation dans des produits alimentaires et des boissons obtenu en refroidissant une matière lamelliforme partiellement fondue et ensuite en broyant et en granulant la matière lamelliforme refroidie, qui contient un support sélectionné à partir d'un groupe constitué par des protéines hydrophiles, la maltodextrine, des amidons, des amidons modifiés, des polysaccharides hydrophiles, des protéines partiellement hydrolysées, des amidons et des saccharides partiellement décomposés, dans lequel l'arôme en granulés a une teneur en humidité de 10 % ou moins en poids et une dureté de 1 N/mm² à 50 N/mm².

4. Arôme en granulés pour l'utilisation dans des produits alimentaires et des boissons selon la revendication 3 contenant des particules ayant une taille de particule de 105 µm à 2 mm, dans lequel la proportion des particules ayant cette taille de particule est de 85 % ou plus en poids.

5. Produit alimentaire ou boisson comprenant l'arôme en granulés pour l'utilisation dans des produits alimentaires et des boissons selon les revendications 3 ou 4.
